# EUROPÄISCHE PATENTSCHRIFT

(11) **EP 3 800 085 B1**
(45) Veröffentlichungstag und Bekanntmachung des Hinweises auf die Patenterteilung: **02.11.2022**
(21) Anmeldenummer: 20187082.1
(22) Anmeldetag: 22.07.2020
(51) Int. Cl.: B60L 53/66, B60L 53/16, B60L 53/18

(54) **ANORDNUNG ZUM LADEN EINES ZUMINDEST TEILWEISE ELEKTRISCH ANGETRIEBENEN KRAFTFAHRZEUGS**
ARRANGEMENT FOR LOADING AN AT LEAST PARTIALLY ELECTRICALLY DRIVEN MOTOR VEHICLE
DISPOSITIF DE RECHARGE D'UN VÉHICULE À MOTEUR AU MOINS PARTIELLEMENT ÉLECTRIQUE

(30) Priorität: 02.10.2019 DE 102019215257
(43) Veröffentlichungstag der Anmeldung: 07.04.2021
(73) Patentinhaber: Volkswagen Aktiengesellschaft, 38440 Wolfsburg (DE)
(72) Erfinder: Steiner, Jan, 38104 Braunschweig (DE); Fleischer, Rainer, 38444 Wolfsburg (DE)

(56) Entgegenhaltungen:
- EP-A2- 3 017 994
- DE-A1-102017 125 133
- DE-A1-102017 125 134
- US-A1- 2016 229 305
- US-A1- 2017 297 442

## Beschreibung

Die Erfindung betrifft eine Anordnung zum Laden eines zumindest teilweise elektrisch angetriebenen Kraftfahrzeugs, mit einem fahrzeugseitigen Steckverbinder zum Anschließen an eine in das Kraftfahrzeug integrierte Ladedose, einem ladesäulenseitigen Steckverbinder zum Anschließen an einen an einer Ladesäule angeordneten Gegensteckverbinder, und einem Ladekabel, welches ein erstes Ende und ein zweites Ende aufweist, wobei das erste Ende mit dem fahrzeugseitigen Steckverbinder verbunden ist und das zweite Ende mit dem ladesäulenseitigen Steckverbinder verbunden ist.

### Stand der Technik

Zum Starten eines Ladevorgangs eines teilweise oder vollständig elektrisch angetriebenen Kraftfahrzeugs muss sich der Benutzer an der Ladesäule authentifizieren. Durch diesen Authentifizierungsvorgang erkennt die Ladesäule, dass bereits eine Bezahlung durch den Benutzer stattgefunden hat bzw. dass eine Bezahlung erfolgen kann. Erst wenn diese Bezahlformalitäten von der Ladesäule erkannt worden sind und damit eine Freigabe für ein Laden des Kraftfahrzeugs an dieser Ladesäule erfolgt, kann der Ladevorgang gestartet werden.

Für diesen Authentifizierungsvorgang hat der Benutzer üblicherweise eine separate Authentifizierungskarte, die er vor ein an der Ladesäule angeordnetes Lesegerät hält. Diese Authentifizierungskarte muss der Benutzer griffbereit zur Hand haben, damit er sein Kraftfahrzeug laden kann. Vergisst er diese mitzunehmen oder geht ihm diese Authentifizierungskarte verloren, so kann er sein Kraftfahrzeug nicht laden.

Die DE 10 2017 125 134 A1 zeigt eine Ladesäule zur Bereitstellung elektrischer Energie für ein elektrisch betreibbares Fahrzeug eines Benutzers über ein Ladekabel, mit einem Ladeverbinder in einem Gehäuse, wobei der Ladeverbinder elektrisch mit dem Ladekabel zum Bezug elektrischer Energie verbindbar ist, einer Kommunikationsschnittstelle, welche zumindest teilweise in dem Gehäuse angeordnet und ausgebildet ist, eine Autorisierungsinformation des Benutzers aus einem Informationsträger drahtlos auszulesen, einem Prozessor, welcher ausgebildet ist, die Autorisierung des Benutzers für den Bezug elektrischer Energie auf der Basis der ausgelesenen Autorisierungsinformation festzustellen, und einer Freigabeeinrichtung, welche ausgebildet ist, die Ladesäule bei festgestellter Autorisierung des Benutzers für den Bezug elektrischer Energie durch den autorisierten Benutzer elektrisch freizugeben.

Aus der US 2017/0297442 A1 ist eine Anordnung zum Laden eines elektrisch angetriebenen Kraftfahrzeuges bekannt, bei der ein Ladekabel vorgesehen ist, dessen fahrzeugseitiger Steckverbinder einen transparenten Indikator aufweist, der mit Lichtquellen versehen ist.

Die DE 10 2017 125 133 A1 zeigt eine Ladesäule zur Bereitstellung elektrischer Energie für ein elektrisch betreibbares Fahrzeug eines Benutzers über ein Ladekabel, mit einem Ladeverbinder, welcher an dem Ladekabel angeordnet ist, wobei der Ladeverbinder mit einer Ladeschnittstelle des elektrisch betreibbaren Fahrzeugs verbindbar ist, einem Gehäuse, in welchem der Ladeverbinder gehaust ist, und einer Kommunikationsschnittstelle, welche zumindest teilweise in dem Gehäuse angeordnet und ausgebildet ist, eine Autorisierungsinformation des Benutzers aus einem Informationsträger drahtlos auszulesen, und einem Prozessor, welcher ausgebildet ist, die Autorisierung des Benutzers für die Benutzung der Ladesäule auf der Basis der ausgelesenen Autorisierungsinformation festzustellen.

Die EP 3 017 994 A2 zeigt eine Anordnung zum Laden von Elektrofahrzeugen, bei der mittels eines Ladekabels ein Fahrzeug mit einer Netzsteckdose verbunden wird. Der fahrzeugseitige Steckverbinder weist einen RFID-Chip auf, mit dem bei eingestecktem Stecker ein Ladevorgang ausgelöst werden kann.

Mit der US 2016/0229305 A1 wird ein Ladevorgang für ein Elektrofahrzeug vorgeschlagen, bei dem über ein Smartphone der Ladevorgang steuerbar ist.

### Darstellung der Erfindung: Aufgabe. Lösung. Vorteile

Es ist daher die Aufgabe der vorliegenden Erfindung, eine Anordnung zur Verfügung zu stellen, mittels welcher das Handling für einen Benutzer zum Laden seines Kraftfahrzeugs erleichtert werden kann.

Diese Aufgabe wird mit den Merkmalen des unabhängigen Anspruchs gelöst. Vorteilhafte Ausgestaltungen und Weiterbildungen der Erfindung sind in den abhängigen Ansprüchen angegeben.

Die Anordnung gemäß der Erfindung zeichnet sich dadurch aus, dass an dem fahrzeugseitigen Steckverbinder mindestens ein Authentifizierungselement zum Starten eines Ladevorgangs angeordnet ist.

Erfindungsgemäß ist es nunmehr vorgesehen, dass ein Authentifizierungselement, mittels welchem die Ladesäule insbesondere erkennen kann, ob ein Bezahlvorgang bereits erfolgt ist bzw. erfolgt, nunmehr unmittelbar an dem fahrzeugseitigen Steckverbinder angeordnet ist, so dass ein Benutzer kein Authentifizierungselement mehr griffbereit halten muss. Das Authentifizierungselement kann damit Teil der erfindungsgemäßen Anordnung sein und muss nicht mehr von dem Benutzer als ein separates Teil mit sich geführt werden. Das Händeln einer separaten Authentifizierungskarte entfällt damit für einen Benutzer. Vor einem Einstecken des Steckverbinders oder während des Einsteckens des Steckverbinders kann sich das in die Anordnung integrierte Authentifizierungselement an der Ladesäule identifizieren. Ist das Authentifizierungselement an dem ladesäulenseitigen Steckverbinder angeordnet, so kann ein Authentifizieren automatisch beim Einstecken des Steckverbinders in den Gegensteckverbinder an der Ladesäule erfolgen, da das Authentifizierungselement dann alleine durch das Einstecken des ladesäulenseitigen Steckverbinders nah genug an das in der Ladesäule angeordnete Lesegerät herangeführt werden kann. Ist das Authentifizierungselement an dem fahrzeugseitigen Steckverbinder angeordnet, so dass kann dieser Steckverbinder von dem Benutzer vor das Lesegerät an der Ladesäule gehalten werden, damit ein Authentifizieren erfolgen kann.

Das mindestens eine Authentifizierungselement ist in einem Gehäuse des fahrzeugseitigen Steckverbinders angeordnet. Ist das Authentifizierungselement an dem Steckverbinder angeordnet, so ist dieses vorzugsweise unmittelbar in dem Gehäuse des Steckverbinders angeordnet, so dass kein zusätzliches Bauteil notwendig ist, um das Authentifizierungselement an dem Steckverbinder aufzunehmen. Bei einer Anordnung des Authentifizierungselements an dem Ladekabel ist dieses an einem Aufnahmeabschnitt an einem Mantel, insbesondere einem Isoliermantel der einzelnen Leitungen des Ladekabels angeordnet. Der Aufnahmeabschnitt kann unmittelbar in dem Mantel integriert und ausgebildet sein, so dass das Authentifizierungselement in den Mantel eingesteckt sein kann. Es ist aber auch möglich, dass der Aufnahmeabschnitt an einer Außenfläche des Mantels ausgebildet ist.

Ist das Authentifizierungselement an dem Steckverbinder angeordnet, so kann das Gehäuse des fahrzeugseitigen Steckverbinders eine Aufnahmetasche zur Aufnahme des mindestens einen Authentifizierungselements aufweisen. In diese Aufnahmetasche kann das Authentifizierungselement eingesteckt werden. Die Aufnahmetasche ist vorzugsweise vollständig von dem Gehäuse des Steckverbinders umschlossen. Die Aufnahmetasche weist vorzugsweise an einer Außenfläche des Gehäuses eine Öffnung, insbesondere eine schlitzförmige Öffnung, auf, über welche das Authentifizierungselement in die Aufnahmetasche eingeschoben werden kann.

Die Aufnahmetasche kann bevorzugt an einem das Steckgesicht ausbildenden Teil des Gehäuses des fahrzeugseitigen Steckverbinders ausgebildet sein. Das Steckgesicht ist der Teil des Gehäuses, an welchem die Kontaktelemente des Steckverbinders aus dem Gehäuses herausragen, um mit Gegenkontaktelementen des Gegensteckverbinders oder der Ladedose in Eingriff gebracht werden zu können, um eine elektrische Kontaktierung auszubilden und damit einen Ladevorgang ermöglichen zu können. Das Steckgesicht ist im eingesteckten Zustand des Steckverbinders durch den Gegensteckverbinder bzw. durch die Ladedose abgedeckt. Ist die Aufnahmetasche an diesem Steckgesicht angeordnet, so ist auch die Aufnahmetasche und insbesondere die Öffnung der Aufnahmetasche im eingesteckten Zustand von dem Gegensteckverbinder bzw. von der Ladedose abgedeckt, so dass ein unerlaubtes Entfernen des Authentifizierungselements nicht möglich ist.

Um ein unerlaubtes Entfernen des Authentifizierungselements zu verhindern, kann es auch möglich sein, dass die Aufnahmetasche und insbesondere die Öffnung der Aufnahmetasche verschließbar ist. Dies ist insbesondere vorteilhaft, wenn die Aufnahmetasche nicht an dem Steckgesicht angeordnet ist. Beispielsweise kann ein Deckel vorgesehen sein, mittels welchem die Öffnung der Aufnahmetasche verschlossen werden kann. Der Deckel kann dabei derart ausgebildet sein, dass er nur mittels eines Spezialwerkzeugs geöffnet werden kann. Der Deckel kann beispielsweise mittels einer Rastverbindung an dem Gehäuse des jeweiligen Steckverbinders verrastet und damit verschlossen werden. Der Deckel kann auch als Abdeckkappe ausgebildet sein.

Auch der Aufnahmeabschnitt an einem Mantel des Ladekabels, wenn das Authentifizierungselement an dem Ladekabel angeordnet ist, kann verschließbar ausgebildet sein. Auch hier kann ein Deckel bzw. eine Abdeckkappe vorgesehen sein, welcher eine Öffnung des Aufnahmeabschnitts, über welche das Authentifizierungselement in den Aufnahmeabschnitt eingeschoben werden kann, verschließen und verriegeln kann.

Das mindestens eine Authentifizierungselement kann unlösbar in dem Gehäuse des fahrzeugseitigen Steckverbinders angeordnet sein. Bereits bei der Herstellung des Steckverbinders kann das Authentifizierungselement mit in dem Steckverbinder verbaut werden, so dass ein Benutzer nicht selbst ein Authentifizierungselement beschaffen muss, um dieses an dem Steckverbinder anzuordnen. Das Authentifizierungselement kann damit fest in dem Steckverbinder eingebaut sein. Das Authentifizierungselement kann dann auch im eingebauten Zustand mit den entsprechend notwendigen Daten beschrieben werden.

Ist das Authentifizierungselement fest eingebaut, kann das mindestens eine Authentifizierungselement von einem Material des Gehäuses des fahrzeugseitigen Steckverbinders umspritzt sein. Beim Spritzgießen des Gehäuses des Steckverbinders kann das Authentifizierungselement in die Werkzeugform mit eingelegt werden, um von dem Material mit umspritzt zu werden. Hierdurch ist eine besonders gute, verliersichere Anordnung des Authentifizierungselements möglich. Zudem sind keine weiteren Arbeitsschritte notwendig, um das Authentifizierungselement in der gewünschten Position anzuordnen.

Alternativ ist es auch möglich, dass das mindestens eine Authentifizierungselement lösbar in dem Gehäuse des fahrzeugseitigen Steckverbinders angeordnet sein kann. Insbesondere beim Vorsehen einer Aufnahmetasche an einem Gehäuse eines Steckverbinders ist eine lösbare Anordnung möglich, so dass das Authentifizierungselement bei Bedarf jederzeit ausgewechselt werden kann.

Um ein gutes und fehlerfreies Lesen der auf dem Authentifizierungselement gespeicherten Daten zu ermöglichen, kann das Gehäuse des fahrzeugseitigen Steckverbinders im Bereich des Authentifizierungselements eine reduzierte Wandstärke aufweisen. Die Wandstärke des Materials des Gehäuses des fahrzeugseitigen Steckverbinders kann damit geringer bzw. dünner ausgebildet sein als in den restlichen Bereichen insbesondere des Gehäuses.

Das Authentifizierungselement kann in Form einer Karte oder eines Chips ausgebildet sein. Ist das Authentifizierungselement lösbar an dem Steckverbinder angeordnet, so ist das Authentifizierungselement vorzugsweise in Form einer Karte, insbesondere einer Ladekarte, ähnlich einer Kreditkarte ausgebildet. Ist das Authentifizierungselement unlösbar an dem Steckverbinder angeordnet, so ist das Authentifizierungselement vorzugsweise in Form eines Chips ausgebildet.

### Kurze Beschreibung der Zeichnung

Weitere, die Erfindung verbessernde Maßnahmen werden nachstehend gemeinsam mit der Beschreibung bevorzugter Ausgestaltungen der Erfindung anhand der nachfolgenden Figuren näher dargestellt.

Es zeigen:
- Fig. 1: eine schematische Darstellung einer Anordnung gemäß der Erfindung mit einem Authentifizierungselement angeordnet an einem fahrzeugseitigen Steckverbinder,
- Fig. 2: eine schematische Darstellung einer Anordnung gemäß der Erfindung mit einem Authentifizierungselement angeordnet an einem ladesäulenseitigen Steckverbinder,
- Fig. 3: eine schematische Darstellung einer Anordnung gemäß der Erfindung mit einem Authentifizierungselement angeordnet an einem Ladekabel,
- Fig. 4: eine schematische Darstellung eines Steckgesichts eines Steckverbinders mit einem dort angeordneten Authentifizierungselement.

### Bevorzugte Ausführungsformen der Erfindung

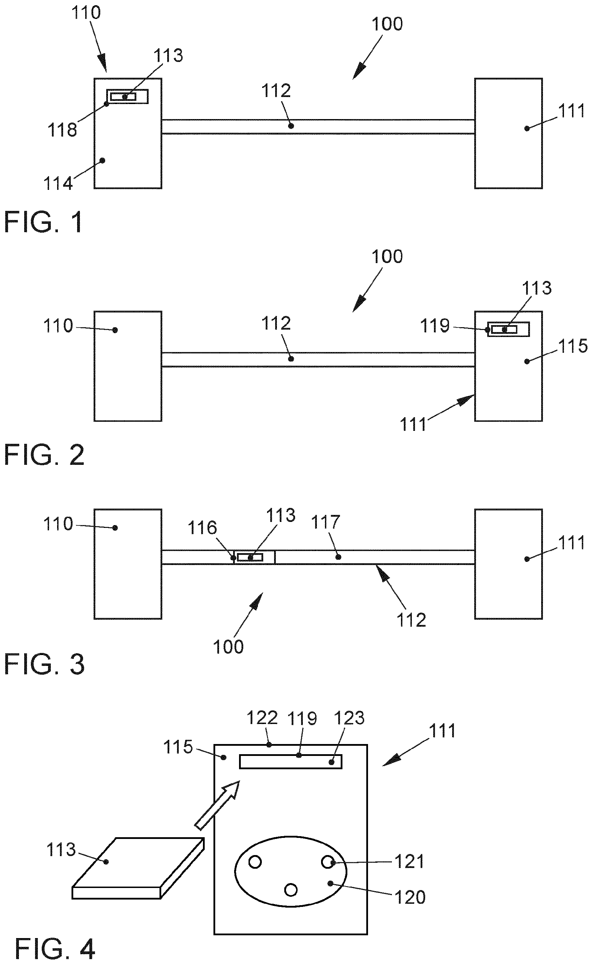

Fig. 1 zeigt eine Anordnung 100 gemäß der Erfindung zum Laden eines zumindest teilweise elektrisch angetriebenen Kraftfahrzeugs.

Die Anordnung 100 weist einen fahrzeugseitigen Steckverbinder 110 auf, welcher mit einer in dem Kraftfahrzeug eingebauten Ladedose elektrisch kontaktierend verbunden werden kann. Weiter weist die Anordnung 100 einen ladesäulenseitigen Steckverbinder 111 auf, welcher mit einem an einer Ladesäule eingebauten Gegensteckverbinder elektrisch kontaktierend verbunden werden kann.

Die beiden Steckverbinder 110, 111 sind über ein Ladekabel 112 miteinander verbunden.

Bei der in Fig. 1 gezeigten Ausgestaltung ist an dem fahrzeugseitigen Steckverbinder 110 ein Authentifizierungselement 113 angeordnet. Das Authentifizierungselement 113 ist in einem Gehäuse 114 des fahrzeugseitigen Steckverbinders 110 angeordnet. Das Gehäuse 114 weist eine Aufnahmetasche 118 auf, in welcher das Authentifizierungselement 113 eingesteckt ist.

Fig. 2 zeigt eine Ausgestaltung der Anordnung 100, bei welcher dieses Authentifizierungselement 113 an dem ladesäulenseitigen Steckverbinder 111 angeordnet ist, wobei das Authentifizierungselement 113 in dem Gehäuse 115 des ladesäulenseitigen Steckverbinders 111 angeordnet ist. Das Gehäuse 115 weist eine Aufnahmetasche 119 auf, in welcher das Authentifizierungselement 113 eingesteckt ist.

Ferner zeigt Fig. 3 eine Ausgestaltung der Anordnung 100, bei welcher das Authentifizierungselement 113 in einem Aufnahmeabschnitt 116 des Mantels 117 des Ladekabels 112 angeordnet ist.

Das Authentifizierungselement 113 kann jeweils lösbar oder unlösbar an dem Steckverbinder 110 angeordnet sein.

Das Authentifizierungselement 113 weist eine Speichereinheit auf, in welcher beispielsweise Benutzerdaten, wie Name des Benutzers und/oder Kontodaten, gespeichert sein können. Die Benutzerdaten können von einem Lesegerät an einer Ladesäule gelesen werden, wodurch eine Authentifizierung des Benutzers erfolgen kann, wobei bei erfolgreicher Authentifizierung des Benutzers der Ladevorgang gestartet werden kann.

Wie in Fig. 4 exemplarisch anhand des ladesäulenseitigen Steckverbinders 111 gezeigt ist, kann die Aufnahmetasche 119 an einem das Steckgesicht 120 ausbildenden Teil des Gehäuses 115 ausgebildet sein. Das Steckgesicht 120 weist die Kontaktelemente 121 auf, welche mit Gegenkontaktelementen des an der Ladesäule angeordneten Gegensteckverbinders kontaktierend verbunden werden können.

Die Aufnahmetasche 119 ist hier oberhalb des Steckgesichts 120 angeordnet. Wie in Fig. 4 zu erkennen ist, weist das Material des Gehäuses 115 zwischen der Aufnahmetasche 119 und einer Außenfläche 122 des Gehäuses 115 eine besonders geringe Wandstärke auf, so dass die auf dem Authentifizierungselement 113 gespeicherten Daten gut von einem Lesegerät auch durch das Material des Gehäuses 115 hindurch gelesen werden können.

Das Authentifizierungselement 113 weist hier die Form einer Karte auf, welche über eine Öffnung 123 in die Aufnahmetasche 119 eingeschoben bzw. eingesteckt werden kann, wie mit dem Pfeil angedeutet ist.

Die Erfindung beschränkt sich in ihrer Ausführung nicht auf die vorstehend angegebenen bevorzugten Ausgestaltungen. Vielmehr ist eine Anzahl von Varianten denkbar, welche von den dargestellten Lösungen auch bei grundsätzlich anders gearteten Ausführungen Gebrauch macht. Sämtliche aus den Ansprüchen der Beschreibung oder den Zeichnungen hervorgehende Merkmale und/oder Vorteile einschließlich konstruktiven Einzelheiten räumlicher Anordnungen und Verfahrensschritte können sowohl für sich als auch in den verschiedensten Kombinationen erfindungswesentlich sein.

### Bezugszeichenliste

- 100: Anordnung
- 110: Fahrzeugseitiger Steckverbinder
- 111: Ladesäulenseitiger Steckverbinder
- 112: Ladekabel
- 113: Authentifizierungselement
- 114: Gehäuse
- 115: Gehäuse
- 116: Aufnahmeabschnitt
- 117: Mantel
- 118: Aufnahmetasche
- 119: Aufnahmetasche
- 120: Steckgesicht
- 121: Kontaktelement
- 122: Außenfläche
- 123: Öffnung

## Patentansprüche

1. Anordnung (100) zum Laden eines zumindest teilweise elektrisch angetriebenen Kraftfahrzeugs, mit einem fahrzeugseitigen Steckverbinder (110) zum Anschließen an eine in das Kraftfahrzeug integrierte Ladedose, einem ladesäulenseitigen Steckverbinder (111) zum Anschließen an einen an einer Ladesäule angeordneten Gegensteckverbinder, und einem Ladekabel (112), welches ein erstes Ende und ein zweites Ende aufweist, wobei das erste Ende mit dem fahrzeugseitigen Steckverbinder (110) verbunden ist und das zweite Ende mit dem ladesäulenseitigen Steckverbinder (111) verbunden ist, **dadurch gekennzeichnet, dass** an dem fahrzeugseitigen Steckverbinder (110) mindestens ein Authentifizierungselement (113) zum Starten eines Ladevorgangs angeordnet ist, **dadurch gekennzeichnet dass** das mindestens eine Authentifizierungselement (113) in einem Gehäuse (114) des fahrzeugseitigen Steckverbinders (110) angeordnet ist und dass das Gehäuse (114) des fahrzeugseitigen Steckverbinders (110) eine Aufnahmetasche (118, 119) zur Aufnahme des mindestens einen Authentifizierungselements (113) aufweist.

2. Anordnung (100) nach Anspruch 1, **dadurch gekennzeichnet, dass** die Aufnahmetasche (118) an einem das Steckgesicht (120) ausbildenden Teil des Gehäuses (114) des fahrzeugseitigen Steckverbinders (110) ausgebildet ist.

3. Anordnung (100) nach Anspruch 1 oder 2, **dadurch gekennzeichnet, dass** die Aufnahmetasche (118, 119) verschließbar ist.

4. Anordnung (100) nach einem der Ansprüche 1 bis 3, **dadurch gekennzeichnet, dass** das mindestens eine Authentifizierungselement (113) unlösbar in dem Gehäuse (114) des fahrzeugseitigen Steckverbinders (110) angeordnet ist.

5. Anordnung (100) nach Anspruch 4, **dadurch gekennzeichnet, dass** das mindestens eine Authentifizierungselement (113) von einem Material des Gehäuses (114) des fahrzeugseitigen Steckverbinders (110) umspritzt ist.

6. Anordnung (100) nach einem der Ansprüche 1 bis 5, **dadurch gekennzeichnet, dass** das Gehäuse (114) des fahrzeugseitigen Steckverbinders (110) im Bereich des Authentifizierungselements (113) eine reduzierte Wandstärke aufweist.

7. Anordnung (100) nach einem der Ansprüche 1 bis 6, **dadurch gekennzeichnet, dass** das Authentifizierungselement (113) in Form einer Karte oder eines Chips ausgebildet ist.

## Claims

1. An arrangement (100) for charging an at least partially electrically driven motor vehicle, comprising a vehicle-side plug connector (110) for connecting to a charging socket integrated into the motor vehicle, a charging-column-side plug connector (111) for connecting to a mating plug connector arranged on a charging column, and a charging cable (112) having a first end and a second end, wherein the first end is connected to the vehicle-side plug connector (110) and the second end is connected to the charging-column-side plug connector (111), **characterized in that** at least one authentication element (113) for starting a charging process is arranged on the vehicle-side plug connector (110), **characterized in that** the at least one authentication element (113) is arranged in a housing (114) of the vehicle-side plug connector (110), and **in that** the housing (114) of the vehicle-side plug connector (110) has a receiving pocket (118, 119) for receiving the at least one authentication element (113).

2. The arrangement (100) according to Claim 1, **characterized in that** the receiving pocket (118) is formed on a part of the housing (114) of the vehicle-side plug connector (110), said part forming the plug face (120).

3. The arrangement (100) according to Claim 1 or 2, **characterized in that** the receiving pocket (118, 119) can be closed.

4. The arrangement (100) according to any one of Claims 1 to 3, **characterized in that** the at least one authentication element (113) is non-detachably arranged in the housing (114) of the vehicle-side plug connector (110).

5. The arrangement (100) according to Claim 4, **characterized in that** the at least one authentication element (113) is overmolded by a material of the housing (114) of the vehicle-side plug connector (110).

6. The arrangement (100) according to any one of Claims 1 to 5, **characterized in that** the housing (114) of the vehicle-side plug connector (110) has a reduced wall thickness in the region of the authentication element (113).

7. The arrangement (100) according to any one of Claims 1 to 6, **characterized in that** the authentication element (113) is designed in the form of a card or a chip.

## Revendications

1. Système (100) destiné à charger un véhicule automobile au moins partiellement à entraînement électrique, comprenant une fiche de raccordement (110) côté véhicule pour le raccordement à une borne de recharge intégrée dans le véhicule automobile, une fiche de raccordement (111) côté station de recharge pour le raccordement à une fiche de raccordement homologue disposée sur une station de recharge et un câble de charge (112), qui comporte une première extrémité et une seconde extrémité, dans lequel la première extrémité est reliée à la fiche de raccordement (110) côté véhicule et la seconde extrémité est reliée à la fiche de raccordement (111) côté station de recharge, **caractérisé en ce que,** sur la fiche de raccordement (110) côté véhicule, au moins un élément d'authentification (113) pour le démarrage d'un processus de charge est disposé, **caractérisé en ce que** l'au moins un élément d'authentification (113) est disposé dans un boîtier (114) de la fiche de raccordement (110) côté véhicule et **en ce que** le boîtier (114) de la fiche de raccordement (110) côté véhicule comporte une poche de rangement (118, 119) pour le rangement de l'au moins un élément d'authentification (113).

2. Système (100) selon la revendication 1, **caractérisé en ce que** la poche de rangement (118) est conçue sur une partie formant la forme de fichage (120) du boîtier (114) de la fiche de raccordement (110) côté véhicule.

3. Système (100) selon la revendication 1 ou 2, **caractérisé en ce que** la poche de rangement (118, 119) est déplaçable.

4. Système (100) selon l'une quelconque des revendications 1 à 3, **caractérisé en ce que** l'au moins un élément d'authentification (113) est disposé à demeure dans le boîtier (114) de la fiche de raccordement (110) côté véhicule.

5. Système (100) selon la revendication 4, **caractérisé en ce que** l'au moins un élément d'authentification (113) est surmoulé à partir d'un matériau du boîtier (114) de la fiche de raccordement (110) côté véhicule.

6. Système (100) selon l'une quelconque des revendications 1 à 5, **caractérisé en ce que** le boîtier (114) de la fiche de raccordement (110) côté véhicule présente une épaisseur de paroi réduite dans la zone de l'élément d'authentification (113).

7. Système (100) selon l'une quelconque des revendications 1 à 6, **caractérisé en ce que** l'élément d'authentification (113) est conçu sous la forme d'une carte ou d'une puce.
